# EUROPÄISCHE PATENTSCHRIFT

(11) **EP 2 332 857 B1**
(45) Veröffentlichungstag und Bekanntmachung des Hinweises auf die Patenterteilung: **04.04.2012**
(21) Anmeldenummer: 09179039.4
(22) Anmeldetag: 14.12.2009
(51) Int. Cl.: B65D 90/10, B60P 3/22

(54) **Domdeckel für einen Tankbehälter eines Tankwagens**
Dome lid for a tank container of a fuel vehicle
Couvercle de dôme pour un récipient à réservoir d'un véhicule à réservoir

(43) Veröffentlichungstag der Anmeldung: 15.06.2011
(73) Patentinhaber: F.A. SENING GMBH, 25474 Ellerbek (DE); Nutzfahrzeuge Rohr GmbH, 94315 Straubing (DE)
(72) Erfinder: Pfeiffer, Franz, 89165 Regglisweiler (DE); Steffen, Ulf, 20253 Hamburg (DE)
(74) Vertreter: Meyer, Ludgerus

(56) Entgegenhaltungen:
- EP-A1- 1 717 164
- DE-A1- 2 951 684
- US-A- 2 324 356
- US-A- 3 344 947
- US-A- 4 441 431
- US-A- 4 570 816
- US-A- 4 889 056

## Beschreibung

Die Erfindung betrifft einen Domdeckel für einen Tankbehälter eines Tankwagens nach dem Oberbegriff des Anspruchs 1.

Übliche Tankwagen enthalten eine oder mehrere Tankkammern, die an der Tankoberseite einen Domschacht aufweisen, der einen Domdeckel enthält, um verschiedene Armaturen oder Rohrleitungen anzuschließen und der eine Fülllochöffnung aufweist, die mit einem Fülllochdeckel verschließbar ist. Im Vergleich zur Gesamtfläche des Domdeckels ist die Fülllochöffnung sehr groß. Es ist daher Vorsorge zu treffen, dass bei einem Unfall des Tankwagens der Domdeckel entweder besonders geschützt ist oder Maßnahmen vorgesehen sind, um zu verhindern, dass Flüssigkeit aus der Fülllochöffnung oder aus dem gesamten Bauteil Domdeckel austreten kann.

Die Normen EN13314 und EN13417 erfordern, dass bei einer Fallprüfung, bei der ein hoher Druck auf den Domdeckel ausgeübt wird, keine Undichtigkeiten zwischen Fülllochöffnung und Fülllochdeckel sowie in dem gesamten Bauteil Domdeckel entstehen. Aus der DE 10 2005 019 676 A1 ist ein Domdeckel für ein Tankfahrzeug bekannt, der den vorgenannten Normen entsprechen soll. Hierbei ist ein die Fülllochöffnung verschließender Fülllochdeckel vorgesehen, der mittels einer Blattfeder, die einseitig neben der Fülllochöffnung schwenkbar befestigt ist, fest an die Fülllochöffnung angedrückt wird. Zum Verschließen des Fülllochdeckels wird die Blattfeder mittels einer Kniehebelverbindung unter Druck gesetzt. Die Kniehebelverbindung besteht aus einem Verschlussbügel, der über mehrere Gelenke verfügt, so dass der Spannbügel im nicht belasteten Zustand eine undefinierbare Stellung einnimmt und daher im geöffneten Zustand des Domdeckels sich als störend erwiesen hat. Des Weiteren enthält die bekannte Einrichtung zwei Spannschrauben zum Aufbringen einer Vorspannung auf die Spannfeder. Hierdurch wird eine unnötige ständige Belastung auf die Spannfeder ausgeübt, welches insbesondere bei einem Unfall des Tankwagens risikobehaftet ist. Ein ähnliches Domdeckel ist aus der US 4670816 bekannt.

Der Erfindung liegt die Aufgabe zugrunde, einen verbesserten Domdeckel für einen Tankbehälter eines Tankwagens anzugeben, der kompakt aufgebaut ist, einfach handhabbar ist und eine hohe Sicherheit gegen unzulässiges bzw. unabsichtliches Öffnen und gegen Undichtigkeit bei einem Umsturz des Tankwagens bietet.

Diese Aufgabe wird durch die in Anspruch 1 angegebene Erfindung gelöst. Vorteilhafte Weiterbildungen der Erfindung sind in Unteransprüchen angegeben.

Die Erfindung geht aus von einem Domdeckel für einen Tankwagenbehälter eines Tankfahrzeuges mit einem oder mehreren Anschlüssen zur lösbaren Verbindung von Armaturen und/oder Rohrleitungen und mit einem Fülllochdeckel zum Verschließen einer Fülllochöffnung. Der Fülllochdeckel wird dabei mittels eines Bügels an einer die Basis des Domdeckels bildenden Abdeckscheibe befestigt, wobei der Bügel an seinem einen Ende schwenkbar an der Abdeckscheibe gelagert ist und am anderen Ende über einen Verriegelungsbolzen in einem an der Abdeckscheibe befestigten Lager arretierbar ist. Die Betätigung des Verriegelungsbolzens erfolgt mittels eines Handgriffs, der an dem Bügel schwenkbar gelagert ist.

Erfindungsgemäß ist der Handgriff zwischen drei Stellungen verschwenkbar, nämlich einer ersten Stellung, in der der Fülllochdeckel die Fülllochöffnung vollständig verschließt und in der der Handgriff mittels einer Verriegelung, insbesondere Fallenverriegelung, arretiert ist, einer zweiten Stellung, in der eine Druckentlastung des Tankbehälters durch ein geringes Öffnen der Fülllochöffnung erreichbar ist, in der die Verriegelung aufgehoben ist und in der der Verriegelungsbolzen eine zweite Riegelstellung in Bezug auf das an der Abdeckscheibe befestigte Lager einnimmt, und einer dritten Stellung, in der die Fülllochöffnung freigegeben ist.

Gemäß der Erfindung lassen sich daher mittels eines einzigen Handgriffs nacheinander drei verschiedene Stellungen des Fülllochdeckels erreichen, nämlich eine geschlossene Stellung, eine Zwischenstellung und eine geöffnete Stellung, wobei zur Freigabe aus der ersten Stellung zunächst eine Verriegelung aufgehoben werden muss. Dadurch wird ein unabsichtliches Öffnen des Fülllochdeckels verhindert. Die Verriegelung des Fülllochdeckels ist dabei mittels eines Verriegelungsbolzens realisiert, der mehrere Stellungen einnehmen kann, um ein sicheres Öffnen und Schließen des Domdeckels zu ermöglichen.

Der Handgriff bleibt in jeder Stellung geklemmt, so dass beim Schließen des Fülllochdeckels der Verriegelungsbolzen zurückgezogen bleibt und der Fülllochdeckel durch Einhand- oder Fußbetätigung einfach geschlossen werden kann.

Vorzugsweise ist der Handgriff zur Betätigung des Fülllochdeckels über eine parallel zur Fülllochdeckel-Lagerung verlaufende Schwenklagerung am Bügel befestigt Der Handgriff wirkt insbesondere über ein Verbinderglied auf den Verriegelungsbolzen ein, so dass der Handgriff ausschließlich über ein einziges Lager schwenkbar ist, während die Bewegungsübertragung zum Verriegelungsbolzen über ein den Handgriff mit dem Verriegelungsbolzen verbindendes Verbinderglied erfolgt.

Die Aufbringung der Andruckkraft über den Verriegelungsbolzen erfolgt über variable Durchmesser bzw. Höhen des Verriegelungsbolzens, nämlich insbesondere dadurch, dass der Verriegelungsbolzen einen ersten rückwärtigen Bereich aufweist, dessen Oberseite bei auf der Fülllochöffnung aufliegendem Fülllochdeckel des Verriegelungsbolzens eine erste Höhe gegenüber dem Fülllochdeckel aufweist, ferner einen an den ersten Bereich angrenzenden Bereich mit geringerer Höhe und schließlich einen dritten, an den zweiten Bereich anschließenden vorderen Bereich, dessen Höhe größer als die des anschließenden zweiten Bereichs, aber geringer als die Höhe des ersten Bereichs gewählt ist.

Der erste Bereich, der die größte Höhe in Bezug auf die Oberseite des Fülllochdeckels aufweist, erzeugt in seinem Arbeitszustand, in dem der Verriegelungsbolzen in das an der Abdeckscheibe befestigte Lager eingeführt ist, einen hohen Druck auf den Fülllochdeckel. Der zweite Bereich, der die Zwischenstellung des Verriegelungsbolzens definiert, ist so gewählt, dass der Fülllochdeckel leicht von der Fülllochöffnung abgehoben ist, so dass gegebenenfalls ein Überdruck im Tank austreten kann. Der Übergang zum dritten Bereich des Verriegelungsbolzens, der wiederum eine Höhe aufweist, die zwischen der Höhe des ersten und zweiten Bereichs liegt, verhindert, dass bei Betätigung des Handgriffs unmittelbar vom ersten Bereich in dem dritten Bereich des Verriegelungsbolzens übergegangen werden kann und von dort zur vollständigen Öffnung des Verriegelungsbolzens. Es wird daher bevorzugt, dass der dritte Bereich nur dann überschritten werden kann, wenn zuvor ein leichter Druck auf den Fülllochdeckel aufgebracht wurde, so dass damit eine Sicherheit gewährleistet ist, dass kein zufälliges unmittelbares Öffnen des Fülllochdeckels möglich ist. Das Wiederandrücken des Fülllochdeckels ist allerdings nur dann möglich, wenn bereits ein Druckausgleich hergestellt ist, so dass auf diese Weise auch die Sicherheit gewährleistet ist, dass sich der Fülllochdeckel nicht schlagartig öffnet.

Um einen gleichmäßigen Übergang zwischen dem ersten und dem zweiten Bereich des Verriegelungsbolzens zu erreichen, sind diese Bereiche über eine Schräge miteinander verbunden.

Vorzugsweise ist der Bügel als U-förmiges, parallel zur Oberseite des Fülllochdeckels verlaufendes Profil gestaltet, dessen Schenkel gegen die Oberseite des Fülllochdeckels gerichtet sind, wobei der Fülllochdeckel an dem Bügel mittels eines zentralen Befestigungsbolzens befestigt ist. Im Normalbetrieb in geschlossener Stellung des Fülllochdeckels erfolgt daher die Aufbringung der Druckkraft auf den Fülllochdeckel nur im zentralen Bereich um den Befestigungsbolzen, wobei in einer weitergehenden Ausführungsform zwischen Fülllochdeckel und Innenwand des Bügels ein Druckkörper vorgesehen ist, der die Kraft des Bügels auf den Fülllochdeckel aufbringt. Der Druckkörper ist vorzugsweise aus Kunststoff gebildet und weist eine erhöhte Elastizität auf, so dass damit Druckspitzen vermieden werden können.

Zur Erhöhung der Sicherheit bei einem Unfall des Tankwagens sind die freien Kanten der Schenkel des Bügels in der normalen Betriebsstellung des Fülllochdeckels gegen die Oberseite des Fülllochdeckels gerichtet, wobei nur ein sehr kleiner Abstand zwischen den Kanten der Schenkel und dem Fülllochdeckel vorgesehen ist, durch den im regulären Betriebszustand keine Kontaktierung zwischen diesen beiden Elementen vorhanden ist. Erst wenn ein hoher Druck von der Seite des Fülllochdeckels gegen den Bügel auftritt, kontaktiert der Fülllochdeckel die Kanten der Schenkel des Bügels, so dass dieser ein weiteres Nachgeben des Fülllochdeckels in Richtung auf eine Öffnung hin verhindert. Der mögliche Bewegungsweg bis zum Anstoßen an die Schenkelkanten ist kleiner gewählt als der mögliche Bewegungsweg einer Dichtung zwischen Fülllochdeckel und Fülllochöffnung, bei der die Dichtung die Öffnung noch verschlossen hält.

Die Fallenverriegelung zur Absicherung gegen zufällige oder unzulässige Öffnung des Handgriffs ist vorzugsweise dadurch gebildet, dass der Bügel einen Ansatz aufweist, der in geschlossener Stellung des Bügels hinter eine Falle der Fallenverriegelung greift, wobei die Freigabe der Falle mittels eines Schwenkhebels möglich ist, der sich im Bereich des Handgriffs befindet. Dadurch kann erreicht werden, dass die Betätigung sowohl des Schwenkhebels als auch des Handgriffs mittels nur einer Hand erfolgen kann.

Um zu vermeiden, dass beim zufälligen Herunterklappen des Fülllochdeckels auf die Fülllochöffnung eine Beschädigung des Lagers des Verriegelungsbolzens auftritt, wenn dieser sich beim Herunterfallen in ausgefahrener Stellung befinden sollte, kann vorgesehen sein, die Oberseite des Lagers mit einer Gummierung oder einem Gummipuffer zu versehen.

Zur Sicherung gegen unzulässige Öffnung des Fülllochdeckels kann der Handgriff ferner eine Sperröse aufweisen, durch die ein Riegelschloss geführt werden kann, das verhindert, dass bei eingesetztem Riegelschloss der Handgriff betätigt werden kann.

Die Erfindung wird nachstehend anhand eines Ausführungsbeispiels näher erläutert. Es zeigen:
- Fig. 1: eine perspektivische Ansicht auf einen Domdeckel nach der Erfindung,
- Fig. 2: eine Seitenansicht des Domdeckels,
- Fig. 3: eine Vorderansicht des Domdeckels,
- Fig. 4: eine Längsschnittansicht eines Domdeckels in einer Ausrichtung gemäß Fig. 2,
- Fig. 5: eine Längsschnittansicht des Domdeckels im geöffneten Zustand,
- Fig. 6: eine Ansicht eines Verriegelungsbolzens.

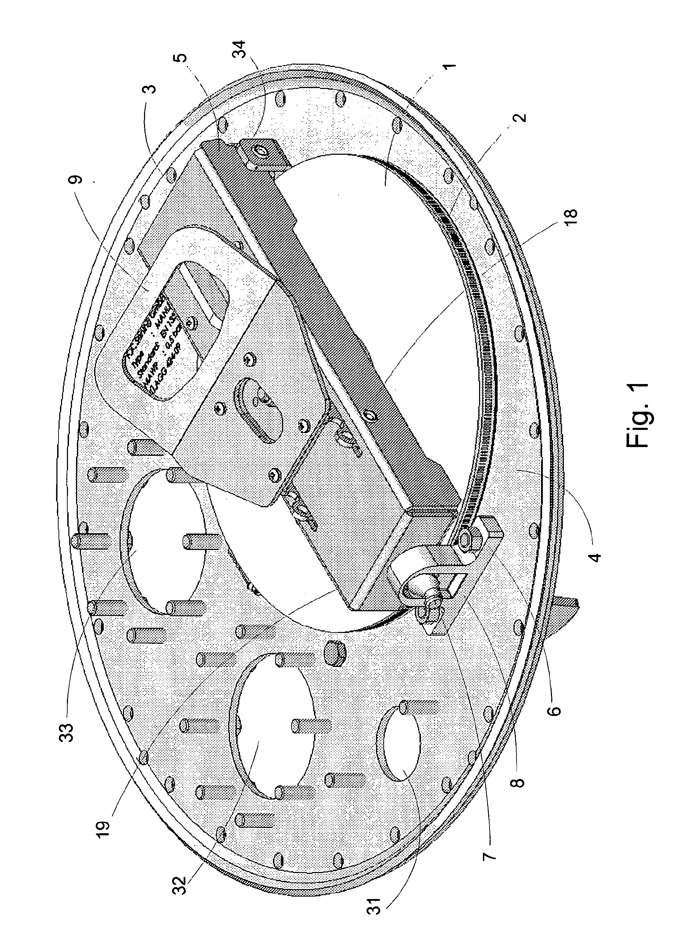

Der Domdeckel gemäß Fig. 1 enthält als Basis eine Abdeckscheibe 4, die über eine Reihe von Verschraubungen an ihrem Außenrand am Domschacht eines Tankwagens befestigbar ist. Die Abdeckscheibe 4 enthält eine Reihe von Öffnungen 31, 32, 33 zum Anschluss von Sicherheitssarmaturen, Rohrleitungen, Messeinrichtungen oder dergleichen. Die größte Öffnung in der Abdeckscheibe 4 ist jedoch durch die Fülllochöffnung 2 gebildet, die mit dem Fülllochdeckel 1 verschließbar ist. Das Öffnen und Verschließen der Fülllochöffnung erfolgt mittels eines Bügels 3, der an seinem ersten Ende 5 über einen Lagerbock 34 an der Abdeckscheibe 4 befestigt ist. Aus dem zweiten Ende 6 des Bügels ragt stirnseitig ein Verriegelungsbolzen 7 hervor, der in Verriegelungsstellung in ein mit einer Querbohrung versehenes Lager 8 eingreift, das an der Abdeckscheibe 4 befestigt ist. Die Öffnung des Fülllochdeckels erfolgt durch eine Verschwenkung des Bügels 3 und des daran befestigten Fülllochdeckels 1 über den Lagerbock 34.

Der Bügel 3 ist im Wesentlichen als U-förmige Schiene ausgebildet, welche Seitenschenkel 18 und 19 aufweist. Der Verriegelungsbolzen 7 ist zur Verriegelung des Fülllochdeckels 1 in die Querbohrung des Lagers 8 einführbar oder zur Entriegelung aus dieser herausziehbar, wobei sich der Verriegelungsbolzen 7 in das Innere des Bügels 3 zurückzieht.

Die Betätigung des Verriegelungsbolzens 7 erfolgt über eine Handbetätigung des Handgriffs 9 an der Oberseite des Bügels 3. Die Verschwenkung des Handgriffs 9 erfolgt über ein Lager 11.

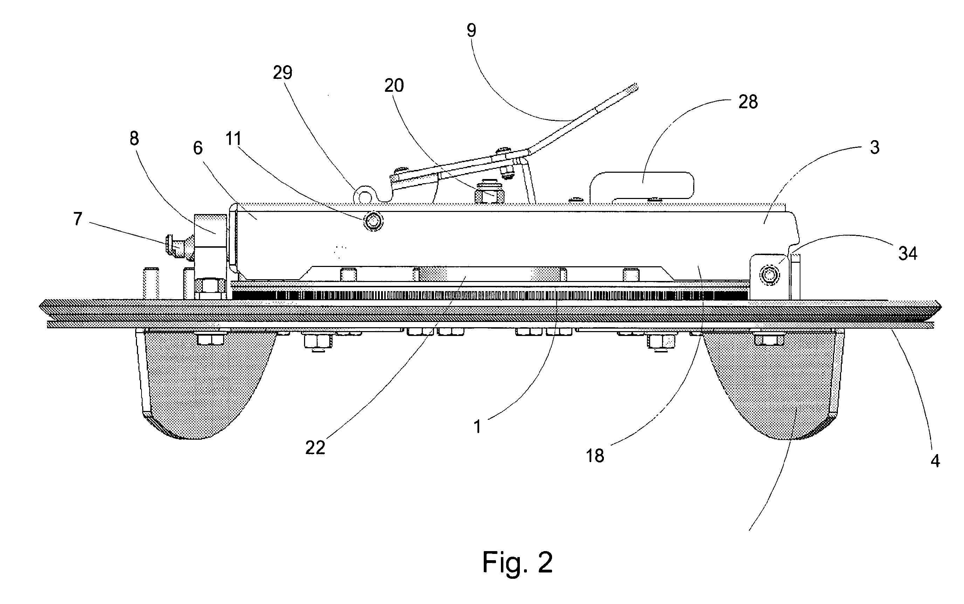

Fig. 2 zeigt eine Seitenansicht des Domdeckels gemäß Fig. 1. Es ist deutlich dargestellt, dass der Bügel 3 über den Lagerbock 34 an der Abdeckscheibe 4 befestigt ist. Der Fülllochdeckel 1 liegt mit seinem Rand, welcher eine umlaufende Dichtung enthält, fest auf der Fülllochöffnung auf. Der Druck auf den Fülllochdeckel wird über einen Druckkörper 22 aufgebracht, der zentral mittels des Befestigungsbolzens 20 am Bügel 3 befestigt ist. Aus dem vorderen Ende 6 des Bügels 3 ragt der Verriegelungsbolzen 7 hervor, der durch die Querbohrung des Lagers 8 hindurchgeführt ist, welches an der Abdeckscheibe 4 festgeschraubt ist. An der Unterseite des Domdeckels sind noch Verstärkungen 35 in Form senkrecht zur Abdeckscheibe verlaufender Streben zu erkennen, welche der Erhöhung der Steifigkeit der Abdeckscheibe 4 dienen.

Wie nachstehend noch dargestellt wird, kann der Handgriff 9 nur dann betätigt werden, wenn zuvor ein Schwenkhebel 28 auf der Oberseite des Bügels 3 betätigt wurde. Eine weitere Voraussetzung zur Betätigung des Handgriffs 9 ist, dass ein nicht dargestelltes Bügelschloss aus der Sperröse 29 entfernt ist. Die Sperröse ist als Ansatz am Handgriff 9 ausgebildet, der bei Anheben des Handgriffs in den Bügel 3 eintaucht.

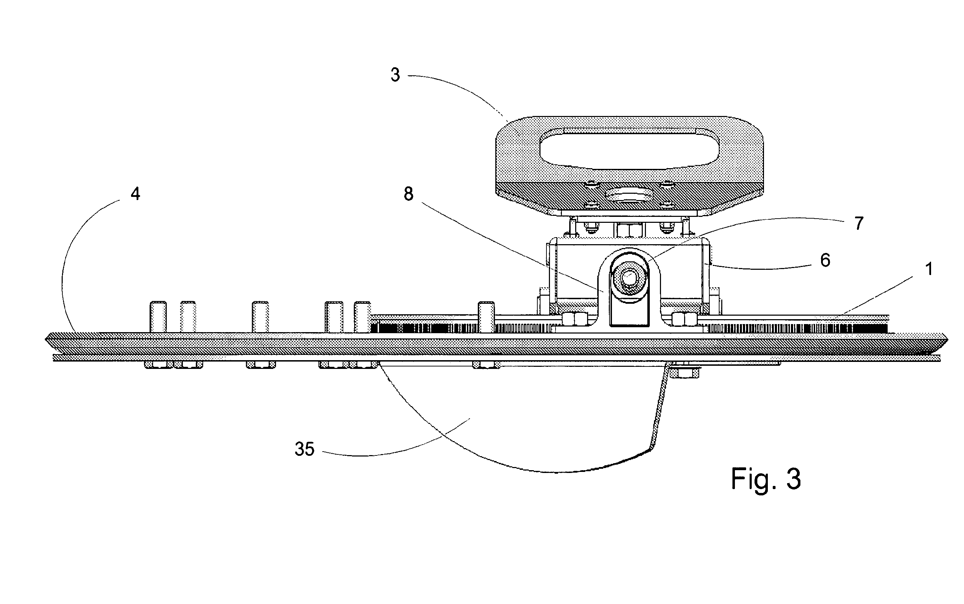

In der in Fig. 3 gezeigten Vorderansicht des Domdeckels ist erkennbar, dass der Verriegelungsbolzen 7 durch Die Querbohrung des Lagers 8 geführt ist, wenn der Fülllochdeckel sich in geschlossener Betriebsstellung befindet. Das Anheben des Handgriffs 9 führt dazu, dass der Verriegelungsbolzen 7 sich aus dem Lager 8 zurückzieht und damit die Freigabe des Fülllochdeckels ermöglicht. Das Lager 8 ist als Gussteil ausgebildet und wird an der Abdeckscheibe 4 verschraubt.

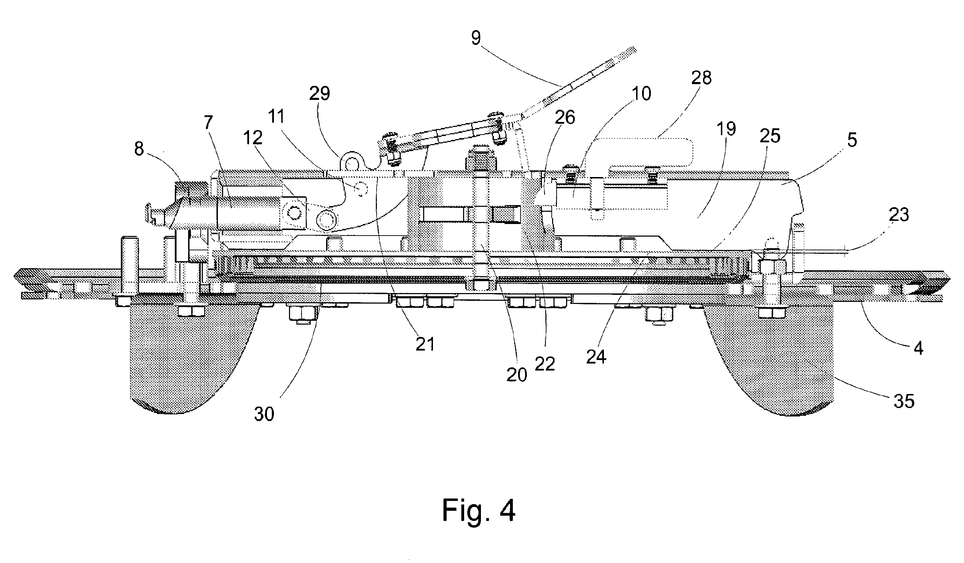

Fig. 4 zeigt eine Schnittansicht des Domdeckels entsprechend Fig. 2, in der der innere Aufbau der Betätigungselemente in dem Bügel 3 erkennbar ist. Die an der Oberseite des Bügels 3 angeordnete Fallenverriegelung 10 enthält einen Schwenkhebel 28, der durch Seitenbewegung ähnlich einer Türbetätigung eine Längsverschiebung der Falle 26 ermöglicht. Der Handgriff 9 enthält in seinem mittleren Bereich einen nach unten gerichteten Ansatz 27, dessen freies Ende abgeknickt ist und das beim Niederdrücken des Handgriffs 9 hinter die Falle 26 schnappen kann. Damit ist eine Nach-Oben-Bewegung des Handgriffs 9 verhindert. Um den Handgriff 9 zu lösen, ist es erforderlich, den Schwenkhebel 28 so weit seitlich zu bewegen, dass die Falle 26 zum ersten Ende 5 des Bügels 3 hin verschoben wird und der Ansatz 27 freigegeben wird. Der Schwenkhebel 28 steht unter Federkraft, so dass er nach Lösen des Schwenkhebels 28 in seine Ausgangsstellung zurückspringt, in der die Falle 26 wieder nach vorn geschoben ist.

Die Befestigung des Fülllochdeckels 1 am Bügel 3 wird dadurch erreicht, dass zwischen der Innenwandung 21 der Basis des Bügels 3 und der Oberseite 24 des Fülllochdeckels 1 ein ringförmiger Druckkörper 22 angeordnet ist, der zwischen Fülllochdeckel 1 und Bügel 3 mittels des Schraubbolzens 20 fest verschraubt ist. Im normalen geschlossenen Betriebszustand sind der Bügel 3 und der Fülllochdeckel 1 daher lediglich zentral miteinander gekoppelt, so dass ein gleichmäßiges Aufbringen der Andruckkraft auf den Fülllochdeckel 1 erreicht werden kann. Die in Richtung des Fülllochdeckels 1 gerichteten Schenkel 18 und 19 des Bügels 3 enden dabei kurz vor der Oberseite 24 des Fülllochdeckels 1 und definieren dadurch einen Abstand 23 zwischen den unteren Kanten 25 der Schenkel 18 und 19 und der Oberseite 24 des Fülllochdeckels 1. Für den Fall, dass von der Innenseite des Tanks ein großer Druck auf den Fülllochdeckel 1 nach Außen wirkt, wird ein Auslenken des Fülllochdeckels 1 über den Abstand 23 hinaus dadurch verhindert, dass der Fülllochdeckel 1 dann an die Kanten 25 des Bügels 3 anstößt und eine weitere Bewegung des Fülllochdeckels verhindert wird. Der Bügel 3 wirkt in diesem Zustand daher als quer über dem gesamten Fülllochdeckel verlaufender Druckstab.

Der Handgriff 9 ist an seinem vorderen Ende über das Lager 11 zwischen den Schenkeln 18 und 19 des Bügels 3 gelagert. Eine Verlängerung des Handgriffs 9 über das Lager 11 hinaus ist mit einem Zwischenglied 12 verbunden, das an einem Ende an dem Handgriff 9 und am anderen Ende an dem Verriegelungsbolzen 7 schwenkbar gelagert ist. Eine Schwenkbewegung des Handgriffs 9 um das Lager 11 führt daher zu einer axialen Längsbewegung des Verriegelungsbolzens 7, der in einer Führung im Bügel 3 in dessen Längsrichtung verschieblich gelagert ist.

Die in Fig. 4 gezeigte Stellung des Handgriffs 9 zeigt den Verriegelungsbolzen 7 in seiner vorderen Stellung, in der seine größte Dicke bzw. Höhe 36 gegenüber der Abdeckscheibe 4 sich im Lager 8 befindet. In dieser Stellung ist daher die größte Andruckkraft auf den Fülllochdeckel 1 hergestellt.

Bei der Freigabe des Handgriffs 9 durch Entsperrung über den Schwenkhebel 28 wird der Verriegelungsbolzen 7 zurückgezogen, so dass er zunächst eine Stellung erreicht, in der er mit seinem kleinsten Durchmesser bzw. seiner geringster Höhe gehalten ist. Dies führt dazu, dass der Fülllochdeckel 1 leicht von der Fülllochöffnung 2 abgehoben wird. Allerdings wird durch die Form des Verriegelungsbolzens 7 zunächst verhindert, dass eine vollständige Verschwenkung des Handgriffs 9 und ein vollständiges Zurückziehen des Verriegelungsbolzens möglich ist. Erst wenn der Fülllochdeckel 1 durch leichten Druck auf das vordere Ende des Bügels heruntergedrückt wird, kann der Verriegelungsbolzen 7 weiter zurückgezogen werden, bis er das Lager 8 vollständig verlassen hat. Dann kann die Fülllochöffnung 3 durch weiteres Aufklappen des Fülllochdeckels 1 vollständig freigegeben werden.

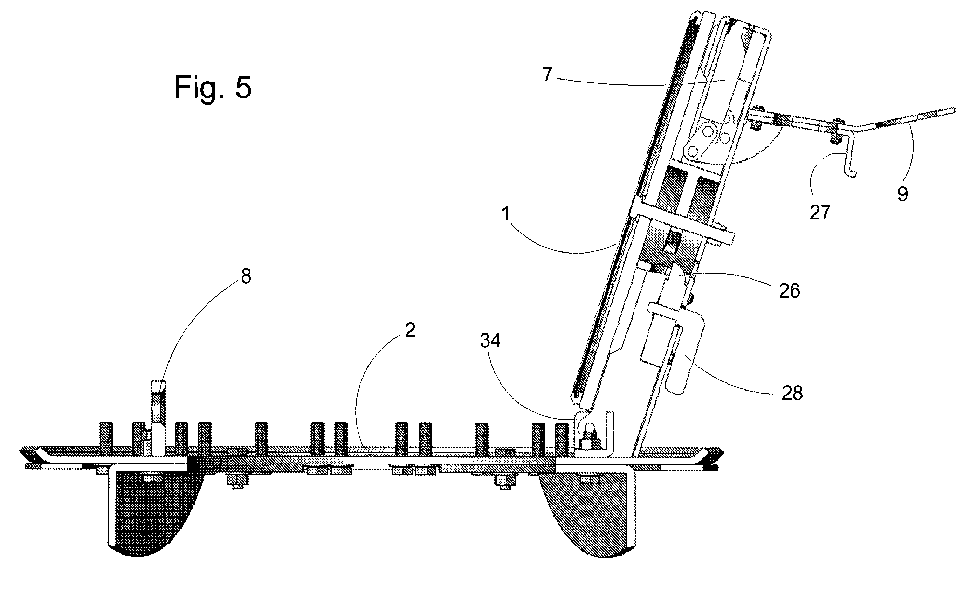

Fig. 5 zeigt den Zustand des Fülllochdeckels mit vollständig zurückgezogenem Verriegelungsbolzen 7 und vollständig aufgerichtetem Handgriff 9 in Offenstellung.

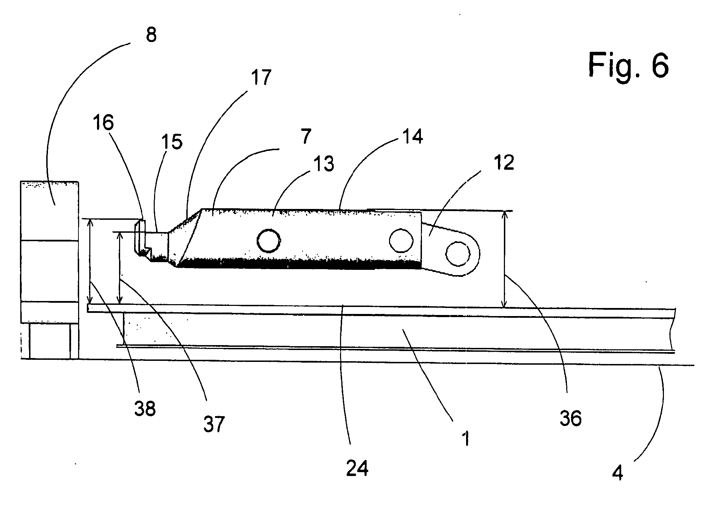

Fig. 6 zeigt den Verriegelungsbolzen 7 in isolierter Darstellung. Der Verriegelungsbolzen 7 weist einen ersten Bereich 13 mit einer Höhe 36 auf, dessen Oberseite 14 über eine Schräge 17 in einen zweiten Bereich 15 mit der Höhe 37 übergeht. An den zweiten Bereich 15 schließt sich der dritte Bereich 16 an, der eine Höhe 38 gegenüber der Oberseite 24 des Fülllochdeckels aufweist, die nicht so groß ist wie die Höhe 37 der Oberseite 14 aber größer als die Höhe 36 des Bereichs 15. Fig. 6 macht deutlich, dass beim Zurückziehen des Verriegelungsbolzens 7 aus dem Lager 8 ein freier Übergang zwischen den Bereichen 13 und 15 entlang der Schräge 17 möglich ist, dass die Überwindung der Stufe zwischen den Bereichen 15 und 16 jedoch zunächst eine queraxiale Bewegung des Bolzens 7 nach unten erfordert, die dadurch erreicht wird, dass mit der Hand Druck auf den Bügel 3 nach unten ausgeübt wird, in dem der Verriegelungsbolzen 7 gelagert ist.

Zum Verschließen des Fülllochdeckels ist ebenfalls ein Andruck auf den Bügel erforderlich, um den Verriegelungsbolzen 7 in das Lager 8 einführen zu können. Das weitere Vorwärtsbewegen des Bolzens 7 erfolgt im Lager 8 über die Schräge 17, die bei der Vorwärtsbewegung des Verriegelungsbolzens 7 zu einer selbstständigen Querbewegung des Verriegelungsbolzens 7 führt und damit den nötigen Anpressdruck auf den Fülllochdeckel 1 erreichen lässt.

Die Erfindung bietet eine hohe Sicherheit gegen unzulässiges Öffnen der Fülllochöffnung, ferner eine hohe Sicherheit auch bei übermäßigem Innendruck, eine einfache Möglichkeit der Betätigung sowie einen kompakten Aufbau.

### Bezugszeichen

- 1: Fülllochdeckel
- 2: Fülllochöffnung
- 3: Riegel
- 4: Abdeckscheibe
- 5: erstes Ende
- 6: zweites Ende
- 7: Verriegelungsbolzen
- 8: Lager
- 9: Handgriff
- 10: Fallenverriegelung
- 11: Schwenklagerung
- 12: Verbinderglied
- 13: erster Bereich
- 14: Oberseite
- 15: zweiter Bereich
- 16: dritter Bereich
- 17: Schräge
- 18: Schenkel
- 19: Schenkel
- 20: Befestigungsbolzen
- 21: Innenwandung
- 22: Druckkörper
- 23: Abstand
- 24: Oberseite
- 25: Kanten
- 26: Falle
- 27: Ansatz
- 28: Schwenkhebel
- 29: Sperröse
- 30: Dichtung
- 31: Öffnung
- 32: Öffnung
- 33: Öffnung
- 34: Lagerbock
- 35: Verstärkung
- 36: Höhe
- 37: Höhe
- 38: Höhe

## Patentansprüche

1. Domdeckel für einen Tankbehälter eines Tankwagens mit einem oder mehreren Anschlüssen zur Verbindung von Armaturen und/oder Rohrleitungen und mit einem Fülllochdeckel (1) zum Verschließen einer Fülllochöffnung (2), wobei der Fülllochdeckel (1) mittels eines Bügels (3) an einer die Basis des Domdeckels bildenden Abdeckscheibe (4) befestigt ist, wobei der Bügel (3) an seinem ersten Ende (5) schwenkbar an der Abdeckscheibe (4) gelagert ist und an seinem zweiten Ende (6) über einen Verriegelungsbolzen (7) in einem an der Abdeckscheibe befestigten Lager (8) arretierbar ist, und wobei die Betätigung des Verriegelungsbolzens (7) mittels eines Handgriffs (9) erfolgt, der an dem Bügel (3) schwenkbar gelagert ist, **dadurch gekennzeichnet, dass** der Handgriff (9) zwischen
einer ersten Stellung, in der der Fülllochdeckel (1) die Fülllochöffnung (2) vollständig verschließt und in der der Handgriff (9) mittels einer lösbaren Verriegelung (10) arretiert ist,
einer zweiten Stellung, in der eine Druckentlastung des Tankbehälters durch geringes Öffnen der Fülllochöffnung (2) erreichbar ist, in der die Verriegelung (10) aufgehoben ist und in der der Verriegelungsbolzen (7) eine zweite Riegelstellung in Bezug auf das an der Abdeckscheibe festigte Lager (8) einnimmt, und
einer dritten Stellung, in der die Fülllochöffnung (2) freigegeben ist, verschwenkbar ist, wobei
der Verriegelungsbolzen (7) einen ersten rückwärtigen Bereich (13), dessen Oberseite (14) bei auf der Fülllochöffnung (2) aufliegendem Fülllochdeckel (1) eine erste Höhe (36) gegenüber der Oberseite des Fülllochdeckels (1) aufweist, einen an den ersten Bereich (13) angrenzenden zweiten Bereich (15) mit geringerer Höhe (37) und einen an den zweiten Bereich (15) anschließenden dritten Bereich (16) aufweist, dessen Höhe (38) größer als die des anschließenden zweiten Bereichs (15), aber geringer als die Höhe des ersten Bereichs (13) gewählt ist.

2. Domdeckel nach Anspruch 1, **dadurch gekennzeichnet, dass** der erste (13) und der zweite (15) Bereich über eine Schräge (17) ineinander übergehen.

3. Domdeckel nach Anspruch 1, **dadurch gekennzeichnet, dass** der Handgriff (9) über eine parallel zur Lagerung (34) des Fülllochdeckels (1) verlaufende Schwenklagerung (11) am Bügel (3) befestigt ist und mittels eines Verbindergliedes (12) auf den Verriegelungsbolzen (7) einwirkt.

4. Domdeckel nach Anspruch 1, **dadurch gekennzeichnet, dass** der Bügel (3) als U-förmiges Profil gestaltet ist, dessen Schenkel (18, 19) gegen den Fülllochdeckel (1) gerichtet sind und dass der Fülllochdeckel 1 mittels eines zentralen Befestigungsbolzens (20) an dem Bügel (3) befestigt ist.

5. Domdeckel nach Anspruch 4, **dadurch gekennzeichnet, dass** zwischen Fülllochdeckel (1) und Innenwandung (21) des Bügels (3) ein Druckkörper (22) eingesetzt ist, über den die bei Verriegelung des Verriegelungsbolzens (7) vom Bügel (3) aufgebrachte Druckkraft zentral auf den Fülllochdeckel (1) aufbringbar ist.

6. Domdeckel nach Anspruch 4, **dadurch gekennzeichnet, dass** die freien Kanten (25) der Schenkel (18, 19) des Bügels (3) an den ersten und zweiten Enden (5, 6) des Bügels (3) in geschlossener Stellung des Fülllochdeckels (1) einen solchen Abstand (23) zur Oberseite (24) des Fülllochdeckels (1) aufweisen, dass der Fülllochdeckel (1) bei drucklosem Tankbehälter die freien Kanten (25) des Bügels nicht berührt und dass bei Überdruck im Tankbehälter der Fülllochdeckel (1) an eine oder mehrere Kanten (25) der Schenkel (18, 19) des Bügels (3) anstößt, jedoch ohne dass eine zwischen Fülllochdeckel (1) und Fülllochöffnung (2) angeordnete Dichtung (30) die Fülllochöffnung dabei freigibt.

7. Domdeckel nach Anspruch 1, **dadurch gekennzeichnet, dass** die Verriegelung des Handgriffs als Fallenverriegelung (10) ausgebildet ist, die eine Falle (26) aufweist, die beim Schließen des Bügels (3) hinter einem Ansatz (27) des Bügels (3) greift und dass die Fallenverriegelung (10) mittels eines Schwenkhebels (28) lösbar ist, der an dem Bügel (3) schwenkbar gelagert ist und sich zur gleichzeitigen Betätigung des Handgriffs (9) und des Schwenkhebels (28) im Bereich des Handgriffs (9) befindet.

8. Domdeckel nach Anspruch 1, **dadurch gekennzeichnet, dass** der Handgriff (9) mittels eines durch eine Sperröse (29) führbaren Bügelschlosses verriegelbar ist.

## Claims

1. Dome lid for a tank container of a tank lorry, said lid having one or more connections for connecting fittings and/or pipelines and having a filling-hole lid (1) for shutting off a filling-hole aperture (2), wherein said filling-hole lid (1) is fastened, by means of a clamp (3), to a covering disc (4) forming the base of the dome lid, wherein said clamp (3) is pivotably mounted, at its first end (5), on the covering disc (4) and can be arrested, at its second end (6), via a locking bolt (7) in a bearing (8) fastened to said covering disc, and wherein actuation of said locking bolt (7) takes place by means of a handle (9) which is pivotably mounted on the clamp (3), **characterised in that**
the handle (9) can be pivoted between:
a first position, in which the filling-hole lid (1) completely shuts off the filling-hole aperture (2) and in which the handle (9) is arrested by means of a releasable locking arrangement (10);
a second position, in which the relieving of pressure in the tank container can be achieved by slight opening of the filling-hole aperture (2), in which the locking arrangement (10) is counteracted and in which the locking bolt (7) takes up a second bolting position with respect to the bearing (8) made fast to the covering disc; and
a third position in which the filling-hole aperture (2) is unblocked;
wherein the locking bolt (7) has a first, rearward region (13), the upper side (14) of which has a first height (36) in relation to the upper side of the filling-hole lid (1) when the latter is resting on the filling-hole aperture (2), has a second region (15) bordering the first region (13) and having a lower height (37), and has a third region (16) which adjoins the second region (15) and the height (38) of which is chosen so as to be greater than that of the adjoining second region (15) but smaller than the height of the first region (13).

2. Dome lid according to claim 1, **characterised in that** the first region (13) and the second (15) region merge into one another via a slope (17).

3. Dome lid according to claim 1, **characterised in that** the handle (9) is fastened to the clamp (3) via a pivot bearing (11) extending parallel to the bearing (34) of the filling-hole lid (1), and acts upon the locking bolt (7) by means of a connector member (12).

4. Dome lid according to claim 1, **characterised in that** the clamp is configured as a U-shaped section, the sides (18, 19) of which are directed towards the filling-hole lid (1), and that said filling-hole lid (1) is fastened to the clamp (3) by means of a central fastening bolt (20).

5. Dome lid according to claim 4, **characterised in that** there is inserted, between the filling-hole lid (1) and the inner wall (21) of the clamp (3), a pressure body (22) via which the pressing force applied by the clamp (3) when the locking bolt (7) is locked can be applied centrally to the filling-hole lid (1).

6. Dome lid according to claim 4, **characterised in that**, when the filling-hole lid (1) is in the closed position, the free edges (25) of the sides (18, 19) of the clamp (3) at the first and second ends (5, 6) of said clamp (3) are at a distance (23) from the upper side (24) of the filling-hole lid (1) such that said filling-hole lid (1) does not touch the free edges (25) of the clamp when the tank container is devoid of pressure, and that, when there is an overpressure in said tank container, the filling-hole lid (1) abuts against one or more edges (25) of the sides (18, 19) of the clamp (3), but without a seal (30) arranged between the filling-hole lid (1) and the filling-hole aperture (2) unblocking said filling-hole aperture in the process.

7. Dome lid according to claim 1, **characterised in that** the locking arrangement of the handle is constructed as a latch-type locking arrangement (10) which has a latch (26) which engages behind an extension (27) of the clamp (3) when said clamp (3) is closed, and that the latch-type locking arrangement (10) can be released by means of a pivoting lever (28) which is pivotably mounted on the clamp (3) and is located in the region of the handle (9) for simultaneous actuation of the handle (9) and pivoting lever (28).

8. Dome lid according to claim 1, **characterised in that** the handle (9) can be locked by means of a shackle lock that can be passed through a blocking eye (29).

## Revendications

1. Couvercle de dôme pour un réservoir d'un véhicule citerne avec un ou plusieurs raccords pour le raccordement d'une robinetterie et/ou de tuyaux, et avec un couvercle d'orifice de remplissage (1) pour fermer un orifice de remplissage (2), étant précisé que le couvercle d'orifice de remplissage (1) est fixé à l'aide d'un étrier (3) à une plaque de recouvrement (4) qui forme la base du couvercle de dôme, que l'étrier (3), à sa première extrémité (5), est monté pivotant sur la plaque de recouvrement (4) et, à sa seconde extrémité (6), est apte à être bloqué par une tige de verrouillage (7) dans un support (8) fixé à la plaque de recouvrement, et que l'actionnement de la tige de verrouillage (7) se fait à l'aide d'une poignée (9) qui est montée pivotante sur l'étrier (3),
**caractérisé en ce que** la poignée (9) est apte à pivoter entre
une première position dans laquelle le couvercle d'orifice de remplissage (1) ferme entièrement l'orifice de remplissage (2) et dans laquelle la poignée (9) est bloquée à l'aide d'un verrouillage amovible (10),
une deuxième position dans laquelle une détente du réservoir peut être obtenue grâce à une légère ouverture de l'orifice de remplissage (2), dans laquelle le verrouillage (10) est supprimé et dans laquelle la tige de verrouillage (7) adopte une deuxième position de verrou par rapport au support (8) fixé à la plaque de recouvrement, et
une troisième position dans laquelle l'orifice de remplissage (2) est dégagé, étant précisé
que la tige de verrouillage (7) présente une première zone arrière (13) dont le côté supérieur (14) présente une première hauteur (36) par rapport au côté supérieur du couvercle (1), quand ledit couvercle (1) est posé sur l'orifice de remplissage (2), une deuxième zone (15) de plus faible hauteur (37) qui fait suite à la première zone (13), et une troisième zone (16) qui fait suite à la deuxième zone (15) et dont la hauteur (38) est choisie pour être plus grande que celle de la deuxième zone (15) voisine, mais plus petite que la hauteur de la première zone (13).

2. Couvercle de dôme selon la revendication 1, **caractérisé en ce que** la transition entre les première (13) et deuxième (15) zones présente une inclinaison (17).

3. Couvercle de dôme selon la revendication 1, **caractérisé en ce que** la poignée (9) est fixée à l'étrier (3) par l'intermédiaire d'un montage pivotant (11) parallèle au montage (34) du couvercle d'orifice de remplissage (1) et agit sur la tige de verrouillage (7) à l'aide d'un élément de liaison (12).

4. Couvercle de dôme selon la revendication 1, **caractérisé en ce que** l'étrier (3) est conçu comme un profilé en U dont les branches (18, 19) sont dirigées vers le couvercle d'orifice de remplissage (1), et **en ce que** ledit couvercle (1) est fixé à l'étrier (3) à l'aide d'une tige de fixation centrale (20).

5. Couvercle de dôme selon la revendication 4, **caractérisé en ce qu'**il est prévu entre le couvercle d'orifice de remplissage (1) et la paroi intérieure (21) de l'étrier (3) un corps de pression (22) par l'intermédiaire duquel la force de pression appliquée par l'étrier (3) lors du verrouillage de la tige de verrouillage (7) peut être appliquée de manière centrale sur le couvercle (1).

6. Couvercle de dôme selon la revendication 4, **caractérisé en ce que** les bords libres (25) des branches (18, 19) de l'étrier (3), aux première et deuxième extrémités (5, 6) de l'étrier (3), présentent dans la position fermée du couvercle d'orifice de remplissage (1) une distance (23) par rapport au côté supérieur (24) du couvercle (1) qui est telle que ledit couvercle (1) ne touche pas les bords libres (25) de l'étrier en l'absence de pression dans le réservoir, et qu'en présence d'une surpression dans le réservoir, le couvercle (1) bute contre un ou plusieurs bords (25) des branches (18, 19) de l'étrier (3), mais sans qu'un joint d'étanchéité (30) disposé entre le couvercle (1) et l'orifice de remplissage (2) ne dégage ledit orifice de remplissage.

7. Couvercle de dôme selon la revendication 1, **caractérisé en ce que** le verrouillage de la poignée est conçu comme un verrouillage à pêne (10) qui comporte un pêne (26) qui vient s'enclencher derrière une pièce rapportée (27) de l'étrier (3) lors de la fermeture de celui-ci, et **en ce que** le verrouillage à pêne (10) est amovible à l'aide d'un levier pivotant (28) qui est monté pivotant sur l'étrier (3), et se trouve dans la zone de la poignée (9) pour actionner simultanément ladite poignée (9) et le levier pivotant (28).

8. Couvercle de dôme selon la revendication 1, **caractérisé en ce que** la poignée (9) est apte à être verrouillée à l'aide d'un cadenas d'étrier apte à traverser un oeillet de blocage (29).
